(19) Europäisches Patentamt
European Patent Office
Office européen des brevets

(11) Veröffentlichungsnummer: **0 096 210**
**B1**

(12) # EUROPÄISCHE PATENTSCHRIFT

(45) Veröffentlichungstag der Patentschrift: **05.02.86**

(51) Int. Cl.⁴: **C 09 D 3/72**

(21) Anmeldenummer: **83104156.1**

(22) Anmeldetag: **28.04.83**

(54) **Lagerstabile Polyurethan-Einkomponenten-Einbrennlacke.**

(30) Priorität: **08.06.82 DE 3221558**

(43) Veröffentlichungstag der Anmeldung: **21.12.83 Patentblatt 83/51**

(45) Bekanntmachung des Hinweises auf die Patenterteilung: **05.02.86 Patentblatt 86/6**

(84) Benannte Vertragsstaaten: **BE DE FR GB IT NL**

(56) Entgegenhaltungen:
**EP-A-0 001 467**
**GB-A-2 066 275**

(73) Patentinhaber: **HÜLS AKTIENGESELLSCHAFT, Patentabteilung / PB 15 - Postfach 13 20, D-4370 Marl 1 (DE)**

(72) Erfinder: **Wolf, Elmar, Dr., Stauffenbergstrasse 7, D-4350 Recklinghausen (DE)**
Erfinder: **Schmitt, Felix, Dr., Tiroler Weg 2, D-4352 Herten (DE)**

(74) Vertreter: **Stell, Hanna, Dipl.-Chem., RSP PATENTE - PB 15 Postfach 1320, D-4370 Marl 1 (DE)**

EP 0 096 210 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft die Verwendung von speziell blockierten Polyisocyanaten mit latentem NCO-Gehalt als Härter von Polyolen.

Blockierte Polyisocyanate werden zur Herstellung von bei Raumtemperatur lagerstabilen, in der Hitze härtbaren 1-KPUR-Einbrennsystemen eingesetzt. Ein Gemisch aus einem Polyisocyanat und einem Polyol ist nur dann bei Raumtemperatur lagerstabil und nur dann bei erhöhter Temperatur mit Pigmenten und sonstigen Zusatzstoffen verarbeitbar, wenn die reaktiven NCO-Gruppen blockiert sind, also nicht reagieren können. Beim Härten muß natürlich das Blockierungsmittel abspaltbar sein.

Das Maskieren oder Blockieren von Polyisocyanaten ist eine seit langem bekannte Arbeitsweise für den temporären Schutz von NCO-Gruppen. Die Herstellung von solchen verkappten Isocyanaten, auch Isocyanatabspalter genannt, wird z.B.im Houben-Weyl, -Methoden der organischen Chemie XIV/2 S. 61-70, beschrieben. In der Literatur werden verschiedene Blockierungsmittel angeführt, z.B. tertiäre Alkohole, Phenole, Acetessigester, Malonsäureester, Acetylaceton, Phthalimid, Imidazol, Chlorwasserstoff, Cyanwasserstoff und ε-Caprolactam. Für organische Polyisocyanate haben nur ε-Caprolactam und Phenol technische Bedeutung erlangt. Derartige mit Caprolactam blockierte Isocyanate werden in der DE-OS 21 66 423 beschrieben. Die verkappten Isocyanate besitzen die Eigenschaft, bei erhöhter Temperatur wie Isocyanate zu reagieren. Die Abspaltung erfolgt umso leichter, je acider das H-Atom der Maskierungsgruppe ist.

Der gravierendste Nachteil bei der Verwendung von Phenolen oder ε-Caprolactam als Blockierungsmittel ist bei einer Reihe von Anwendungsgebieten die relativ hohe Abspalttemperatur, die für die meisten Polyisocyanate bei mindestens 140 °C und höher liegt.

Es besteht großes Interesse an blockierten Polyisocyanaten, die bei noch tieferen Temperaturen deblockieren.

Überraschenderweise wurde nunmehr gefunden, daß es durchaus möglich ist, auf einfache Weise blockierte Polyisocyanate herzustellen, die bei wesentlich niedrigeren Temperaturen deblockieren als die mit den herkömmlichen Blockierungsmitteln verkappten Isocyanats, wenn man zur Herstellung der blockierten Polyisocyanate spezielle sekundäre Amine einsetzt.

Gegenstand der Erfindung sind nun lagerstabile PolyurethanEinkomponenten-Einbrennsysteme, die oberhalb 120 °C härten, aus Polyolen und blockierten Polyisocyanaten, dadurch gekennzeichnet, daß man als blockierte, gegebenenfalls in bekannter Weise molekülvergrößerte Polyisocyanate Umsetzungsprodukte aus Polyisocyanaten und sterisch gehinderten sekundären Aminen der allgemeinen Formel

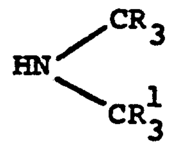

einsetzt, worin R gleiche oder verschiedene Substituenten aus der GruPpe Wasserstoff, Alkyl von $C_3$ - $C_9$, Cycloalkyl, gegebenenfalls mit $C_1$ - $C_4$ Alkylgruppen substituiert und gegebenenfalls Heteroatome enthaltend, Aralkyl, $R^1$ gleiche oder verschiedene Substituenten aus der Gruppe Wasserstoff, Alkyl, Cycloalkyl, Aralkyl sein können und gegebenenfalls R und $R^1$ einen gemeinsamen Ring bilden können. Die Polyisocyanate und die sekundären Amine werden dabei in solchen Mengen eingegetzt daß auf eine Isocyanatgruppe 0,5-1, vorzugsweise 0,5-1 Mol sekundäres Amin kommen.

Amine, auch sekundäre Amine sind als Blockierungsmittel bereits beschrieben. Es handelt sich bei den bekannten Aminen aber nicht um sterisch gehinderte Verbindungen, und sie führen nur zu bei hohen Temperaturen härtenden PUR-Systemen, während erfindungsgemäß bereits bei ca. 120 °C eine quantitative Aushärtung eintritt.

Gemäß EP-A 0 001 467 werden auch Imidazoline als Blockierungsmittel eingesetzt, aber auch hier liegen die Einbrenntemperaturen höher. Desweiteren gibt es zwar eine Reihe von Patentanmeldungen, in denen Harnstoffe aus Mono- wie Diisocyanaten mit Primären oder sekundären Aminen als Härter für Epoxidharze beschrieben werden, wi-e z.B. in den US-PSen 3 227 679' 3 317 612, 3 321 549, 3 789 071, 3 407 175, 3 956 237. Die Härtung erfolgt hierbei im wesentlichen durch Reaktion der Harnstoffgruppe mit der Epoxidgruppe unter Oxazolidinonbildung. Über Harnstoffe aus Polyisocyanaten und sekundären Aminen als (Heiß-)Härter für Polyole finden sich dagegen keine Hinweise in der Literatur (bei Abspalttemperaturen unter 200° C). Es muß darauf hingewiesen werden, daß nicht grundsätzlich alle sekundären Amine zur Herstellung der erfindungsgemäßen Verbindungen geeignet sind. Die erfindungsgemäß einsetzbaren Amine müssen sterisch gehindert sein; so ist z.B. Di-n;propylamin im Gegensatz zum Di-isopropylamin als Blockierungsmittel nicht geeignet, da die mit Di-n-propylamin hergestellten Polyharnstoffe zu stabil sind. Je sterisch gehinderter das sekundäre Amin - genauer gesagt, die sterische Abschirmung des am N gebundenen HAtoms ist - desto niedriger ist die Aufspalttemperatur des damit blockierten Polyisocyanats.

Als Ausgangsverbindungen, die zur Blockierung mit den sekundären Aminen eingesetzt werden können, eignen sich beispielsweise Polyisocyanate, insbesondere Diisocyanate, wie aliphatische, cycloaliphatische, araliphatische, arylsubstituierte aliphatische und/oder aromatische Diisocyanate, wie sie beispielsweise in Houben-Weyl,

Methoden der organischen Chemie, Band 14/2, S. 61-70 und dem Artikel von W. Siefken in Justus Liebigs Annalen der Chemie 562, 75-136, beschrieben werden, wie 1,2-Ethylendiisocyanat, 1,4-Tetramethylendiisocyanat, 1,6-Hexamethylendiisocyanat, 2,2,4- bzw. 2,4,4Trimethyl-1,6-hexamethylendiisocyanat (TMDI), 1,12-Dodecandiisocyanat,ω,ω'-Diisocyanatodipropylether, Cyclobutan1,3-diisocyanat, Cyclohexan-1,3- und 1,4-diisocyanat, 3-Isocyanatomethyl-3,5,5-trimethylcyclohexylisocyanat, welches auch als Isophorondiisocyanat bezeichnet und mit IPDI abgekürzt wird, Decahydro-8-methyl-(1,4-methano-naphthalen-2 (oder 3) 5-ylendimethylen-diisocyanat, Decahydro-4,7-methano-inda-1 (oder 2) 5 (oder 6)-ylendimethylen-diisocyanat, Hexahydro-4-7-methanindan-1- (oder 2) 5 (oder 6)-ylen-diisocyanat, Hexahydro-1,3- bzw. 1,4-phenylen-diisocyanat, 2,4und 2,6-Hexahydrotoluylendiisocyanat, Perhydro-2,4'-und/ oder -4,4'-diphenyl-methan-diisocyanat,ω,ω-Diisocyanato1,4-diethylbenzol, 1,4-Phenylendiisocyanat, 4,4'-Diisocyanato-diphenyl, 4,4'-Dii8ocyanato-3,3'-dichlor-diphenyl, 4,4'Diisocyanato-3,3'-dimethoxy-diphenyl, 4,4'-Diisocyanato3,3'-dimethyl-diphenyl, 4,4'-Diisocyanato-3,3'-diphenyldiphenyl, 4,4'-Diisocyanato-diphenylmethan, Naphthylen-1,5diisocyanat, Toluylendiisocyanato, Toluylen-2,4- bzw. 2,6diisocyanat, N,N'-(4,4'-Dimethyl-3,3'-diisocyanatodiphenyl)uretdion, m-Xylylendiisocyanat, aber auch die Triisocyanate wie 2,4,4'-Triisocyanato-diphenylether, 4,4',4'-Triisocyanato-triphenylmethan, Tris-(4-isocyanatophenyl)-thiophosphat. Weitere geeignete Isocyanate werden in dem genannten Artikel in den Annalen auf Seite 122 f. beschrieben.

Besonders bevorzugt werden in der Regel die technisch leicht zugängigen aliphatischen, cycloaliphatischen oder aromatischen Diisocyanate und besonders das 3-Isocyanatomethyl3,5,5-trimethyl-cyclohexylisocyanat und Toluylendiisocyanat sowie deren isomere Gemische.

Neben den monomeren Polyisocyanaten können als Ausgangsstoffe für die Blockierung mit den nachstehend ausführlich beschriebenen sekundären Aminen selbstverständlich auch die dimeren und trimeren Formen der Polyisocyanate, wie Uretdione und Isocyanurate, eingesetzt werden, die nach bekannten Methoden herstellbar sind.

Unter Polyisocyanaten im Sinne der vorliegenden Erfindung werden auch solche verstanden, die vor der Blockierung mit den sekundären Aminen einer Umsetzung zur Molekülvergrößerung mit den in der Isocyanatchemie gebräuchlichen sogenannten Kettenverlängerungsmitteln, wie z.B. Polyolen, unterworfen wurden, wobei das bi- oder trifunktionelle Kettenverlängerungsmittel, also solche mit gegenüber Isocyanatgruppen reaktionsfähigen Gruppen, wie z.B. Hydroxyl-Gruppen tragende Verbindungen, in solchen Mengen verwendet wird, daß das resultierende neue Isocyanat im Durchschnitt mindestens 2 Isocyanatgruppen trägt.

Geeignete Polyole sind beispielsweise Diole und Triole, z.B. Ethylenglykol, Propylenglykole, wie 1,2-und 1,3-Propandiol, 2,2-Dimethylpropandiol-(1,3), Butandiole, wie Butandiol-(1,4), Hexandiole, z.B. Hexandiol-(1,6), 2,2,4-Trimethylhexandiol(1,6), 2,4,4-Trimethylhexandiol-(1,6), Heptandiol-(1,7), Octadecen-9,10-diol-(1,12), Thiodiglykol, Octadecandio-(1,18), 2,4-Dimethyl-2-propylheptandiol-(1,3), Buten- oder Butindiol(1,4), Diethylenglykol, Triethylenglykol, trans- und cis-1,4Cyclohexandimethanol, 1,4-Cyclohexandiole, Glycerin, Hexantriol-(1,2,6), 1,1,1-Trimethylolpropan, 1,1,1-Trimethylolethan u.a. Es können auch Mischungen der vorgenannten Verbindungen verwendet werden.

Die Umsetzung der Polyisocyanate vor der Blockierung mit den genannten Kettenverlängerungsmitteln in den angegebenen Mengenverhältnissen kann bei Temperaturen im Bereich von 0-150°C, vorzugsweise 80-120°C durchgeführt werden.

Geeignete sekundäre Amine im Sinne der vorliegenden Erfindung, die der früher beschriebenen allgemeinen Formel entsprechen, sind beispielsweise Di-isopropylamin, iso-Proyltert.-butylamin, Di-cyclohexylamin, Di-(3,5,5-trimethylcyclohexyl)amin, 2,6-Dimethylpiperidin, 2,5-Dimethylpyrrolidin, 2,2,6,6-Tetramethylpiperidin, 2,2,4,6-Tetramethylpiperidin, iso-Propylcyclohexylamin, u.a.m. Es können auch Gemische der sekundären Amine erfindungsgemäß eingesetzt werden.

Die Umsetzung der Polyisocyanate mit den sekundären Aminen kann sowohl in Lösungsmitteln als auch in Schmelze durchgeführt werden. Wird in Substanz gearbeitet, so wird zu dem auf 70: 120°C erhitzten Polyisocyanat das sekundäre Amin so zudosiert, daß die Temperatur des Reaktionsgemisches nicht über 130°C steigt. Nach Beendigung der Blockierungsmittelzugabe wird das Reaktionsgemisch zur Vervollständigung der Reaktion noch ca. eine Stunde bei ca. 100-120°C weiterer erhitzt.

Die Blockierung kann, wie bereits erwähnt, auch in Lösungsmitteln durchgeführt werden. Als Lösungsmittel für diese Reaktion kommen nur solche infrage, die mit den Polyisocyanaten nicht reagieren, beispiclsweise Ketone, wie Aceton, Methylethylketon, Methylisobutylketon, Cyclopentanon, Cyclohexanon u.a. Aromaten, wie Benzol, Toluol, Cyclole, Chlorbenzol, Nitrobenzol u.a. cyclische Ether, wie Tetrahydrofuran, Dioxan u.a. Kohlenwasserstoffe, wie Chloroform, Tetrachlorkohlenstoff u.a. sowie aprotische Lösungsmittel, wie Dimethylformamid, Dimethylacetamid, Dimethylsulfoxid usw.

Bei den so erhältlichen Addukten handelt es sich im allgemeinen um Verbindungen des Molekulargewichtsbereichs von 300-2500,

vorzugsweise von 300-1000. Die Verfahrensprodukte besitzten einen Schmelzbereich im Temperaturbereich von 30220°C vorzugsweise 80-160°C. Die mit den sekundären Aminen blockierten Polyisocyanate sind weiter durch einen Gehalt an endständig in blockierter Form vorliegenden Isocyanatgruppen (berechnet als NCO) von 4-25 Gew.%, vorzugsweise 10-21 Gew.%, charakterisiert.

Die Verfahrensprodukte eignen sich insbesondere als Härter für Zerewitinoff-aktive Wasserstoffatome aufweisende höherfunktionelle Verbindungen. In Kombination mit derartigen Zerewitinoff-aktive Wasserstoffatone aufweisenden Verbindungen bilden die Verfahrensprodukte oberhalb 120°C, vorzugsweise 130-200°C zu hochwertigen Kunststoffen aushärtbare Systeme.

Das bedeutendste Anwendungsgebiet für die erfindungsgemäßen Verbindungen ist ihre Verwendung als Bindemittel für lösungsmittelhaltige 1-K-PUR-Einbrennlacke.

Geeignete Partner für die Verfahrensprodukte zur Herstellung derartiger hitzehärtbarer 8ysteme sind mindestens zwei Hydroxyl- und oder Aminogruppen aufweisende Verbindungen. Vorzugsweise werden Polyhydroxylverbindungen, speziell solche vom Molgewicht 400-2000 eingesetzt. Bei diesen OH-enthaltenden Verbindungen handelt es sich vorzugsweise um 2-6 Hydroxylgruppen aufweisende Polyester, Polyether, Polyacetale, Polyesteramide und Polyepoxide.

Die erfindungsgemäß zu verwendenden hydroxylgruppenhaltigen Polyester müssen einen niedrigen Glasumwandlungspunkt besitzen, er soll unter 20°C und oberhalb -25°C liegen. Wesentliche Bestandteile der Polyester sind:

1) cyclische Polycarbonsäuren und ihre Ester und Anhydride, z.B. Phthalsäure, Isophthalsäure, Terephthalsäure, Benzol-1,2,4-tricarbonsäure, Trimellithsäureanhydrid, Dimethylterephthalat (DMT) und ihre Hydrierungsprodukte

2) Diole, z.B. Ethylenglykol, 1,2-Propandiol, 1,2- oder 1,3oder 1,4-Butandiol, 2,2-Dimethylpropandiol, 3-Methylpentandiol-1,5, Hydroxypipvalinsäureneopentylglykolester, Hexandiol-1,6, Cyclohexandiol, 4,4-Dihydroxydicyclohexylpropan-2,2, 1,4-Dihydroxymethylcyclohexan, Diethylenglykol, Triethylenglykol

3) Polyole, wie Glycerin, Hexantriol, Pentaerythrit, Trimethylolpropan, Trimethylolethan.

Anteilmäßig können die Polyester auch monofunktionelle Carbonsäuren, z.B. Benzoesäure, sowie acyclische Polycarbonsäuren wie Adipinsäure, 2,2,4-(2,4,4)-Trimethyladipinsäure, Sebacinsäure oder Dodecandicarbonsäure enthalten. Die Polyester werden in an sich bekannter Weise durch Verestern oder Umestern gegebenenfalls in Gegenwart üblicher Katalysatoren, hergestellt, wobei durch geeignete Wahl des COOH/OH-Verhältnisses Endprodukte erhalten werden, deren Hydroxylzahl etwa 40 und 240, bevorzugt zwischen etwa 70 und 150 liegt.

Für die erfindungsgemäßen Einkomponenten-Einbrennlacke geeignete Lösungsmittel sind solche, deren unterer Siedepunkt bei etwa 100°C liegt. Die obere Grenze des Siedepunks des Lösungsmittels ist von den jeweiligen Einbrennungsbedingungen abhängig. Wenn man bei höheren Temperaturen einbrennt, müssen auch die Siedepunkte der zu verwendenden Lösungsmittel bei höheren Temperaturen liegen. Als Losungsmittel kommen unter anderem folgende Verbindungen in Frage: Kohlenwasserstoffe wie z.B. Toluol, Xylol, Solvesso ®150 (ein Lösungsmittelgemisch der Firma Shell), Tetralin, Cumol, Ketone, wie z.B. Methylisobutylketon, Diisobutylketon, Isophoron und Ester, wie z.B. Essigsäure-n-hexylester, Essigsäurebutylester, Ethylenglykolacetat (EGA), Butylglykolacetat usw. Die genannten Verbindungen können auch als Gemisch eingesetzt werden. Die Konzentration des Harz (Oxyester)/HärterGemisches in den erwähnten Lösungsmitteln liegt zwischen 40 und 70 Gew.%.

Die erfindungsgemäßen Einkomponenten-Einbrennlacke können in geeigneten Mischaggregaten, z.B. Rührkessel durch einfaches Vermischen der drei Lackkomponenten (hochsiedendes Lösungsmittel, Polyester, verkapptes Polyisocyanat), bei 80-100°C hergestellt werden.

Auch übliche Zusatzstoffe wie Pigmente, Verlaufmittel, Glanzverbesserer, Antioxidantien und Hitzestabilisatoren können der Lacklösung zugesetzt werden. Die Einkomponentenlacke eignen sich zur Applikation, insbesondere auf Metalloberflächen, jedoch können sie auch auf Gegenstände aus anderen Materialien wie Glas oder Kunststoffe aufgebracht werden. Die erfingungsgemäßen Lacke finden vor allem Anwendung in der Coil-Coating-Lackierung für außenwitterungsbeständige Ein- und Zweischicht-Lackierungen.

Die Aushärtung der erfindungsgemäßen Lacke erfolgt je nach der Anwendung in einem Temperaturbereich von 120-350°C, vorzugsweise zwischen 130 und 300°C in einer Zeit von 30 min bis 30 sec. Die ausgehärteten Überzüge weisen hervorragende lacktechnische Eigenschaften auf.

Bekanntlich führt bei der Aushärtung von PUR-Lacken die Anwesenheit von Aminen zu Vergilbungen. Es ist deshalb ein besonders überraschender Effekt der vorliegenden Erfindung, daß beim Aushärten der erfindungsgemäßen Einbrennlacke keine Verfärbungen auftreten.

**I. Herstellung der blockierten Polyisocyanate**

**Beispiel 1**

Zu 444 Gew.T. Isophorondiisocyanat (IPDI) Wurden bei 120° C 724 Gew.T. Dicyclohexylamin so zugetropft, daß die Temperatur des Reaktionsgemisches nicht über 140° C stieg. Nach erfolgter Dicyclohexylaminzugabe wurde zur Vervollständigung der Reaktion noch ca. 1 Stunde bei 130° C weitererhitzt.

Das so hergestellte Reaktionsprodukt hatte einen Schmelzpunkt von 105-110° C und einen Gehalt an blockiertem NCO von 14,38%; freies Amin war nicht mehr nachweisbar.

**Beispiel 2**

In analoger Weise zu dem im Beispiel 1 beschriebenen Verfahren wurden bei 130° C zu 222 Gew.T. IPDI 226 Gew.T. 2,6-Dimethylpiperidin zugegeben. Hach erfolgter 2,6-Dimethylpiperidinzugabe wurde zur Vervollständigung der Reaktion noch ca. 1 Stunde bei 130° C weitererhitzt.

Das so hergestellte Reaktionsprodukt hatte einen Schmelzpunkt von 99-103° C und einen Gehalt an blockiertem NCO von 18,7%; freies Amin.konnte nicht mehr nachgewiesen werden.

**Beispiel 3**

Zu 111 Gew.T. IPDI, die in 500 Gew.T. wasserfreiem Aceton gelöst waren, wurden bei Raumtemperatur 101 Gew.T. Diisopropylamin innerhalb von ca. 2 Stunden zugetropft. Nach der Diisopropylaminzugabe wurde noch 2 Stunden bei 50° C weitererhitzt. Danach wurde das Aceton abdestilliert; die letzten Reste Aceton wurden im Vakuumtrockenschrank bei 60° C und 1 Torr entfernt. Das Reaktionsprodukt hatte einen Schmelzpunkt von 65-74° C und einen Gehalt an blockiertem NCO von 19,8%.

**Beispiel 4**

Zu 222 Gew.T. IPDI wurden bei 130° C 530 Gew.T. Di-(3,5,5-trimethyl)-cyclohexylamin innerhalb von ca. 2 Stunden zugetropft.

Nach Beendigung der Aminzugabe wurde das Reaktionsgemisch noch 2 Stunden bei 130° C erhitzt. Das Reaktionsprodukt hatte einen Schmelzpunkt von 84-91° C und einen Gehalt an blockiertem NCO von 11,1%.

**Beispiel 5**

Zu 222 Gew.T. IPDI wurden bei 130° C 282 Gew.T. 2,2,4,6-Tetramethylpiperidin innerhalb von ca. 2 Stunden zugetropft. Nach der 2,2,4,6-Tetramethylpiperidinzngabe wurde das Reaktionsgemisch noch ca. 1 Stunde bei 130° C.weitererhitzt.

Das Reaktionsprodukt hatte einen Schmelzpunkt von 120-125° C und einen Gehalt an blockiertem NCO von 16,6%. Im Gegensatz zu den Verbindungen von Beispiel 1-4 wird hier bei der Titration mit wäßriger HCl das zur Blockierung eingesetzte Amin quantitativ innerhalb von ca. 2 Stunden erfaßt. Das mit 2,2,4,6-Tetramethylpiperidin blockierte IPDI ist also nicht hydrolysebeständig.

**Beispiel 6**

Zu 168 Gew.T. Hexamethylendiisocyanat wurden bei 130° C 202 Gew.T.-Diisopropylamin innerhalb von 2 Stunden zugetropft. Nach Beendigung der Diisopropylaminzugabe wurde das Reaktionsgemisch noch ca. 1 Stunde bei 130° C weitererhitzt. Das Reaktionsprodukt hatte einen Schmelzpunkt von 130-140° C und einen Gehalt an blockiertem NCO von 22,7%.

**Beispiel 7**

Zu 100 Gew.T. IPDI-T 1890 (trimeres IPDI; Verkaufsprodukt der Chemischen Werke hüls) mit einem NCO-Gehalt von 17,2%, die in 100 Gew.T. Xylol/Ethylglykolacetat (Gewichts-Verhältnis 2:1) gelöst waren, wurden bei 100° C innerhalb von ca. 3 Stunden 41,6 Gew.T. Diisopropylamin gegeben. Anschließend wurde noch 2 Stunden weitererhitzt. Die so erhaltene Lösung hatte bei Raumtemperatur eine Viskosität von 261 mPas. Der Gehalt an blockiertem NCO betrug 7,1%.

**Reäktivität der erfindungsgemäßen Verbindungen**

Zur Prüfung, wie reaktiv ein (mit einem Amin) blockiertes Polyisocyanat (spez. Diisocyanat) gegenüber einem Polyol ist, wurde dieses mit einem Polyol im Äquivalenzverhältnis ($NC0_{block}$ OH - 1 1) bei verschiedenen Temperaturen in einer Knetkammer geknetet und in Abhängigkeit der Zeit der Knetwiderstand verfolgt. In dem Maße, wie Reaktion eintrat, stieg der Knetwiderstand. Trat Vernetzung ein, erfolgte ein steiler Anstieg des Knetwiderstandes, der mit einem abrupten Abfall verbunden war. Das vernetzte Produkt wurde fein vermahlen und hatte dann nur noch einen geringen Widerstand.

| Härter | [illegible]verhalten von Härter/Oxyester P 1137 (NCO : OH = 1 : 1) bei | | |
|---|---|---|---|
| | 120°C | 160°C | 180°C |
| IPDI blockiert mit Piperidin | — | keine Vernetzung | — |
| IPDI blockiert mit 2,6-Dimethylpiperidin | | n. 10' vernetzt | n. 4' vernetzt |
| IPDI blockiert mit 2,2,6,6-Tetramethylpiperidin | vernetzt sofort | — | — |
| Vgl. IPDI blockiert mit ε-Caprolactam | | | n. 10' vernetzt |

P 1137: Oxyester mit einer OH-Zahl von 106-114 und einem Schmelzbereich von 70-90° C (Verkaufsprodukt der Chemischen Werke hüls)

## II. Anwendungsbeispiele

Anwendungsbeispiel 1

A) Hydroxylgruppenhaltiger Polyester (Herstellung) 7 Mol Isophthalsäure (1,163 g), 6 Mol Hexandiol-1,6 (709 g) und 2 Mol 1,1,1-Trimethylolpropan (268 g) wurden in einem 4 1-Glaskolben unter Zusatz von 0,1 Gew.% n-Dibutylzinnoxid der Veresterung unterworfen. Mit steigender Temperatur entstand eine homogene Schmelze und bei ca. 195° C kam es zur ersten Wasserabscheidung. Innerhalb von 8 Stunden wurde die Temperatur auf 220° C erhöht und bei dieser Temperatur während 6 weiteren Stunden die Veresterung zu Ende geführt. Die Säurezahl war dann kleiner als 1 mg KOH/g. Nachdem die Polyesterschmelze auf ca. 200° C abgekühlt war, wurden bei einem Vakuum von 20-30 mm Hg während 30-45 Min die flüchtigen Anteile entfernt.

Während der gesamten Reaktion wurde ein schwacher $N_2$Strom durch das Reaktionssystem geleitet.

Chemische und physikalische Kenndaten:

| | |
|---|---|
| OH-Zahl | 105 mg KOH/g |
| Säurezahl | < 1 mg KOH/g |
| Molgewicht | 2400 |
| Glasumwandlungstemperatur | -12°C bis +5°C |

B) Blockierte Isocyanatkomponente

Es wurde das im Herstellungsbeispiel 3 beschriebene Polyisocyanat eingesetzt.

C) PUR-Einbrennlacke

1000 g des Polyesters (s. 1 A) werden gemeinsam mit 398 g des blockierten Polyisocyanates (vgl. Herstellungsbeispiel 3) in 466 g n-Butylacetat und 466 g Xylol bei 40 50° C gelöst.

Nach der folgenden Rezeptur wurde in üblicherweise ein wärmehärtender Weißlack formuliert:

Rezeptur:

65,0 Gew.% der oben beschriebenen Harzlösung
3,0 Gew.% n-Butylglykolacetat
2,0 Gew.% Isophoron
28,8 Gew.% Weißpigment ($TiO_2$)
2,0 Gew.% 10%ige Lösung in Ethylglykolacetat eines löslichen Verlaufmittels auf der Basis eines organofunktionellen Silikonöls
0,2 Gew.% Dibutylzinndilaurat

Mit dem beschriebenen Lack wurden Aluminiumbleche beschichtet und unter verschiedenen Bedingungen die Aushärtung vorgenommen.

Die Prüfergebnisse werden in der folgenden Tabelle dargestellt

| Härtungsbedingung | Lacktechnische Abprüfung | | | | | | | | |
|---|---|---|---|---|---|---|---|---|---|
| | SD | PH | ET | GS | $G_{20}$ | $G_{45}$ | $G_{60}$ | MEK-Test | Vergilbung |
| 30 min 110°C | 40 | 153 | 0,5 | 1 | 90 | 60 | 96 | 60 | keine |
| 30 min 120°C | 30 | 179 | 7,8 | 0 | 87 | 56 | 96 | >200 | keine |
| 10 min 140°C | 35 | 181 | 6,5 | 0 | 90 | 55 | 94 | >200 | keine |
| 0,75 min 300°C | 25 | 174 | 8,5 | 0 | 69 | 56 | 92 | >200 | keine |
| (Zeichenerklärung: vgl. Anwendungsbeispiel 2) | | | | | | | | | |

Diskussion:

Die Meßdaten weisen aus, daß mit oben beschriebenem Lack eine quantitative Vernetzung/Aushärtung ab ca. 120° C möglich ist. Überraschenderweise tritt trotz aminischem Blockierungsmittel keine Vergilbung auf.

Anwendungsbeispiel 2

A) Hydroxylgruppenhaltiger Polyester (Herstellung) Mit dem in Anwendungsbeispiel 1 A beschriebenen Verfahren wurde in analoger Weise ein hydroxylgruppenhaltiger Polyester hergestellt, wobei die folgenden Rohstoffe eingesetzt wurden:

10 Mol Isophthalsäure (1661 g)
5,5 Mol Hexandiol-1,6 (650 g)
2,0 Mol Diethylenglykol (212 g)
4,0 Mol Trimethylolpropan (537 g)

Kenndaten des Polyesters:

OH-Zahl 132 mgKOH/g
Säure-Zahl 2 mgKOH/g

Der Polyester wurde in n-Butylacetat/Xylol (1:1) gelöst. Der Festkörpergehalt der Lösung betrug 60 Gew.%.

B) Blockierte Isocyanatkomponente

Es wurde das im Herstellungsbeispiel 7 beschriebene blockierte Polyisocyanat eingesetzt.

C) PUR-Einbrennlack

Nach der folgenden Rezeptur wurde ein Klarlack formuliert

49,3% Polyesterlösung (s.o.)
41,5% Lösung, blockiert. Polyisocyanat (Herstellungsbeispiel 7)
3,0% Butylglykolacetat
2,0% Isophoron
1,0% 10%ige Lösung in Ethylglykolacetat eines Verlaufmittels auf der Basis eines organofunktionellen Silikonöls
0,2% Dibutylzinndilaurat

Mit dem beschriebenen Lack wurden Aluminiumbleche beschichtet und unter verschiedenen Bedingungen der Aushärtung unterworfen. Die Prüfergebnisse werden in der folgenden Tabelle dargestellt.

| Härtungs-bedingung | Lacktechnische Abprüfung SD | PH | ET | GS | MEK-Test | Vergilbung |
|---|---|---|---|---|---|---|
| 25 min 130°C | 35 | 186 | 7,0 | 0 | >200 | keine |
| 7 min 160°C | 40 | 193 | 7,8 | 0 | >200 | keine |
| 4 min 180°C | 40 | 186 | 8,1 | 0 | >200 | keine |

Zeichenerklärung:
SD: Schichtstärke in µm
PH: Pendelhärte nach König, DIN 53 157
ET: Tiefung nach Erichsen, DIN 53 156
GS: Gitterschnitt, DIN 53 151
G: Glanzwerte nach Gardner

**Patentanspruch**

Lagerstabile Polyurethan-Einkomponenten-Einbrennsysteme, die oberhalb 120 °C härten, aus Polyolen und blockierten Polyisocyanaten, dadurch gekennzeichnet, daß man als blockierte, gegebenenfalls in bekannter Weise molekülvergrößerte Polyisocyanate Umsetzungsprodukte aus Polyisocyanaten und sterisch gehinderten sekundären Aminen der allgemeinen Formel

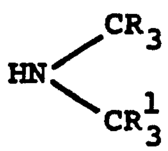

einsetzt, worin R gleiche oder verschiedene Substituenten aus der Gruppe Wasserstoff, Alkyl von $C_3$ - $C_9$, Cycloalkyl, gegebenenfalls mit $C_1$ - $C_4$ Alkylgruppen substituiert und gegebenenfalls Heteroatome enthaltend, Aralkyl, $R^1$ gleiche oder verschiedene Substituenten aus der Gruppe Wasserstoff, Alkyl, Cycloalkyl, Aralkyl sein können und gegebenenfalls R und $R^1$ einen gemeinsamen Ring bilden können.

**Claim**

Storage-stable polyurethane single-component baking systems which harden above 120°C and consist of polyols and blocked polyisocyanates, characterised in that, as blocked polyisocyanates of which the molecule has optionally been enlarged in a known manner, there are employed reaction products of polyisocyanates and sterically hindered secondary amines of the general formula

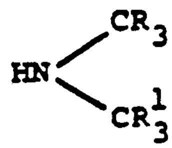

wherein R can be identical or different substituents from the group of hydrogen, $C_3$-$C_9$-alkyl, cycloalkyl, optionally substituted with $C_1$-$C_4$-alkyl groups and optionally containing hetero-atoms, aralkyl, $R^1$ can be identical or different substituents from the group of hydrogen, alkyl, cycloalkyl or aralkyl and R and $R^1$ can optionally form a conjoint ring.

**Revendication**

Systèmes pour vernis à cuire à un seul composant de polyuréthane stable au stockage, qui durcissent au-dessus de 120° C, à base de polyols et de polyisocyanates bloqués, caractérisés en ce que l'on utilise, comme polyisocyanates bloqués, dont la molécule a été éventuellement grossie de la façon connue, des produits de la réaction de polyisocyanate et d'amines secondaires à empêchement stérique répondant à la formule générale

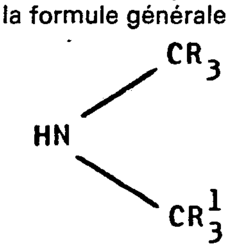

où R peut être des substituants semblables ou différents du groupe des hydrogène, alcoyl en $C_3$ à $C_9$, cycloalcoyl, éventuellement substitués avec des groupes alcoyl en $C_1$ à $C_4$, et contenant éventuellement des hétéro-atomes, aralcoyl, $R_1$, des substituants semblables ou differents du groupe des hydrogène, alcoyl, cycloalcoyl, aralcoyl, R et $R_1$ pouvant former en commun un cycle.